# EUROPÄISCHE PATENTANMELDUNG

(11) **EP 1 016 637 A2**
(43) Veröffentlichungstag der Anmeldung: **05.07.2000**
(21) Anmeldenummer: 99122037.7
(22) Anmeldetag: 15.11.1999
(51) Int. Cl.: C03C 17/25, C03C 17/34, C23C 18/12, C04B 41/85, C04B 41/89

(54) **Verfahren zur Herstellung eines mikrostrukturierten SiO2/TiO2-Schichtsystems**

(30) Priorität: 28.12.1998 DE 19860511
(71) Anmelder: Fraunhofer-Gesellschaft zur Förderung der angewandten Forschung e.V., 80636 München (DE)
(72) Erfinder: Löbmann, Peer, Dr. Dipl.-Chem., 97074 Würzburg (DE)
(74) Vertreter: Albrecht, Thomas, Dr.

(57) **Zusammenfassung**

Beschrieben wird ein Verfahren zur Herstellung eines mikrostrukturierten Schichtsystems, umfassend ein Substrat und eine oder mehrere Schichten aus TiO₂/SiO₂. Ein nach diesem Verfahren hergestelltes mikrostrukturiertes Schichtsystem kann als diffraktives Gitter, Antireflexschicht oder Biosensor verwendet werden.

## Beschreibung

Die Erfindung betrifft ein Verfahren zur Herstellung eines mikrostrukturierten Schichtsystems, das ein Substrat und eine oder mehrere Schichten aus Titandioxid/Siliciumdioxid (TiO₂/SiO₂) umfaßt.

Die Brechzahl von Sol-Gel-Beschichtungen im System SiO₂/TiO₂ läßt sich durch das Verhältnis Si/Ti einstellen, Verfahren für Glasbeschichtungen variabler Endzusammensetzung sind in der Literatur hinreichend bekannt (vergleiche A. Matsuda et al., *J. Mat. Sci. Let*. **8** (1989) 902). Besondere Bedeutung gewinnt die Brechzahl der Schicht, wenn sie genau an die optischen Eigenschaften des Substrates angepaßt sein muß. Weisen Schichten auch nach thermischer Verdichtung eine Restporosität auf, sinkt ihre Brechzahl unter den für das jeweilige Material theoretisch zu erwartenden Wert. Diese Abweichung der Brechzahl kann aber durch Veränderung der Schichtzusammensetzung unter Beibehalt der Porosität wieder ausgeglichen werden.

Die Brechzahl mikrostrukturierter Schichten, die von der einfallenden Strahlung nicht mehr aufgelöst werden können, muß besonders exakt eingestellt werden, um Anwendungen als diffraktive Gitter, Antireflexschichten, Biosensoren oder im Bereich des Strahlungsmanagements zu ermöglichen. Für viele dieser Anwendungen ist jedoch eine Restporosität der Schicht problematisch, weil sich z.B. die Abriebbeständigkeit oder die Witterungsstabilität verringert. Das Eindringen von Flüssigkeiten in die Poren verändert deren optische Eigenschaften, was beim Einsatz in der Sensorik und Meßtechnik zum Driften des Meßsignals führen kann.

In der Literatur werden zwei Arten prägbarer Sol-Gel-Schichten beschrieben: Organisch-Anorganische Hybridmaterialien (z.B. Ormocere) lassen sich als dünne Schichten auf Substrate aufbringen, erfolgt die Aushärtung nach Aufdrücken eines mikrostrukturierten Stempels, kann man einen aspekttreuen Abdruck des Prägestempels erhalten (vergleiche H. Krug et al., *J. Non-Cryst. Solids* **147-148** (1992) 447). Diese Systeme weisen keine oder eine zu vernachlässigende Restporosität auf, ihre Brechzahl läßt sich aber nur in engen Grenzen variieren. Darüber hinaus liegt die Obergrenze der thermischen Belastbarkeit der Hybride bei 300°C bis 400°C.

Mit rein anorganischen Schichten aus z.B. SiO₂/TiO₂ oder reinem TiO₂ lassen sich Brechzahlen über 2,0 leicht realisieren, ihre thermische und UV-Beständigkeit ist hoch. Um bei diesen Schichtsystemen Prägbarkeit zu erreichen, werden den Solen organische Polymere beigefügt, die auf der einen Seite die Viskosität der Flüssigkeit erhöhen ("thickening agent") und auf der anderen Seite eine Plastizität der Schicht herbeiführen (vergleiche T. Minami et al., *US-Patent* 4,810,547, 7. März 1989 und N. Toghe et al., *J. Non-Cryst. Solids* **100** (1988) 501). Durch den Ausbrand dieser Zusätze entsteht in den Schichten jedoch Porosität, die die Brechzahl herabsetzt (vergleiche A. Matsuda et al., *SPIE* Vol. **1328** Sol-Gel-Optics (1990) 62).

Der Erfindung liegt die Aufgabe zugrunde, ein Verfahren zur Herstellung eines mikrostrukturierten SiO₂/TiO₂-Schichtsystems bereitzustellen, bei dem Schichtsysteme erhalten werden, deren Gefüge und insbesondere deren Oberfläche eine hohe Dichte aufweist, die eine überlegene Abriebbeständigkeit und Witterungsbeständigkeit aufweisen und in die vorzugsweise keine Flüssigkeit eindringt. Die chemische Zusammensetzung der Schichten und somit der Brechungsindex soll dabei über einen weiten Bereich variabel sein.

Gegenstand der Erfindung ist ein Verfahren zur Herstellung eines mikrostrukturierten Schichtsystems, umfassend ein Substrat und eine oder mehrere Schichten aus TiO₂/SiO₂, gekennzeichnet durch
(i) Herstellung eines SiO₂/TiO₂-Sols durch
   (a) Auflösen einer Siliciumverbindung der allgemeinen Formel

      Si(OR)₄,

      in der die Reste R gleich oder verschieden sind und geradkettige, verzweigte oder cyclische Alkyl- oder Alkenylreste mit 1 bis 10 Kohlenstoffatomen darstellen, die gegebenenfalls ein oder mehrere Carbonyl- und/oder Ester- und/oder Carboxylfunktionen aufweisen, in einem aliphatischen Alkohol mit 1 bis 5 Kohlenstoffatomen,
   (b) Vorhydrolyse der Lösung durch Zugabe von Wasser oder wäßrigen sauren oder alkalischen Lösungen,
   (c) Auflösen bzw. Umsetzen einer Titanverbindung der allgemeinen Formel

      Ti(OR)₄,

      worin R wie voranstehend definiert ist, in bzw. mit β-Ketoestern und/oder β-Diketonen und gegebenenfalls Verdünnen der so erhaltenen Lösung mit einem aliphatischen Alkohol mit 1 bis 5 Kohlenstoffatomen,
   (d) Zugabe der titanhaltigen Lösung zu der siliciumhaltigen Lösung und gegebenenfalls
   (e) Verdünnung der so erhaltenen Lösung mit einem aliphatischen Alkohol mit 1 bis 5 Kohlenstoffatomen oder einem Gemisch, umfassend den vorgenannten Alkohol und ein Diol mit 2 bis 8 Kohlenstoffatomen,
(ii) Beschichten eines Substrats mit dem gemäß Stufe (i) erhaltenen SiO₂/TiO₂-Sol,
(iii) Trocknen des beschichteten Substrats und gegebenenfalls Aufbringen einer weiteren Schicht aus einem gemäß Stufe (i) erhaltenen SiO₂/TiO₂-Sol oder einer an sich bekannten Sol-Gel-Schicht,
(iv) Prägung der Oberfläche des so beschichteten Substrate zur Herstellung einer Mikrostruktur unter Auslagern des beschichteten Substrats bei einer Temperatur von 80°C bis 110°C und
(v) Temperaturbehandlung des beschichteten Substrate bei 250°C bis 550°C.

Die Erfindung beruht auf der überraschenden Feststellung, daß sich auch Schichten mit einer Mikrostruktur versehen lassen, die aus Solen erhalten wurden, die keine polymeren Prägehilfestoffe bzw. "thickening agents" (wie beispielsweise Polyethylenglykol) enthalten.

Das bei dem erfindungsgemäßen Verfahren eingesetzte Sol wird aus Titanverbindungen der allgemeinen Formel

Ti(OR)₄

und aus Siliciumverbindungen der allgemeinen Formel

Si(OR)₄

hergestellt, worin R wie voranstehend definiert ist. Zweckmäßigerweise steht R für einen geradkettigen oder verzweigtkettigen Alkylrest mit 2 bis 6 Kohlenstoffatomen. Daneben ist es bevorzugt, wenn sich ein oder mehrere Reste OR der vorgenannten Formel von Oxoestern, β-Diketonen, Carbonsäuren, Ketocarbonsäuren oder Ketoalkoholen ableiten. Besonders bevorzugt ist es, wenn sich der Rest OR von Acetylaceton ableitet. Beispiele für geeignete Silicium- bzw. Titanverbindungen, die bei dem erfindungsgemäßen Verfahren eingesetzt werden können, sind Verbindungen der Formeln M(OEt)₄, M(Oi-Pr)₄, M(On-Pr)₄ und M(AcAc)₂(Oi-Pr)₂, worin M für Si oder Ti steht.

Zur Herstellung des Sols wird die Siliciumverbindung zunächst in einem aliphatischen Alkohol mit 1 bis 5 Kohlenstoffatomen gelöst. Diese Alkohole können geradkettig oder verzweigt sein. Beispielsweise können bei dem erfindungsgemäßen Verfahren Methanol, Ethanol, Propanol, Isopropanol, Butanol und Pentanol verwendet werden, wobei grundsätzlich sämtliche Isomeren der vorgenannten Alkohole geeignet sind. Besonders bevorzugt ist die Verwendung von Ethanol.

Anschließend wird diese Lösung vorhydrolysiert. Hierzu eignen sich Wasser und wäßrige saure oder alkalische Lösungen.

Die Titanverbindung wird zunächst mit β-Ketoestern und/oder β-Diketonen, wie z.B. Acetylaceton, umgesetzt und das Reaktionsgemisch anschließend gegebenenfalls mit dem vorgenannten aliphatischen Alkohol verdünnt.

Im Anschluß daran wird die titanhaltige Lösung unter Rühren zu der siliciumhaltigen Lösung getropft und gegebenenfalls mit dem aliphatischen Alkohol oder einem Gemisch, umfassend diesen Alkohol und ein Diol mit 2 bis 8 Kohlenstoffatomen, verdünnt. Die Diole können geradkettig oder verzweigtkettig sein. Besonders bevorzugt ist die Verwendung von 1,3-Propandiol und 1,5-Pentandiol.

Durch diese Vorgehensweise lassen sich durch entsprechende Wahl der Konzentration an Silicium- bzw. Titanverbindung bzw. entsprechende Verdünnung molare Si/Ti-Verhältnisse von 100/0 bis 20/80 einstellen.

Das so hergestellte Sol wird anschließend auf ein Substrat aufgebracht. Zweckmäßigerweise wird dabei ein Glassubstrat verwendet, das beispielsweise durch ein Tauchziehverfahren mit dem Sol beschichtet werden kann. Die Schichtdicke läßt sich dabei über die Ziehgeschwindigkeit einstellen.

Bei dem erfindungsgemäßen Verfahren können neben Substraten aus Glas auch andere Substrate wie solche aus Metallen oder Keramiken (Z.B. Al₂O₃ oder YSZ) eingesetzt werden.

Nach dem Beschichten mit dem Sol wird das Substrat getrocknet. Die Trocknung erfolgt bei Raumtemperatur und ein Zeitraum von 1 bis 5 Minuten ist ausreichend.

Die Oberflächenstrukturierung erfolgt zweckmäßigerweise durch einen mikrostrukturierten Prägestempel, wobei Prägestempel aus Nickel oder dessen Abprägung in Polymerfolien üblicherweise verwendet werden. Die Profiltiefe eines solchen Prägestempels liegt im Bereich von 5 bis 500 nm und vorzugsweise ca. 20 nm.

Dadurch können Eindrucktiefen im Bereich von 5 bis 300 nm realisiert werden.

Der Prägestempel bzw. seine Abprägung in Polymerfolien wird mit einer Schraubzwinge auf die Schicht gepreßt und die Probe 1 bis 10 Minuten bei Temperaturen von 80°C bis 110°C ausgelagert.

Nach der Auslagerung kann der Prägestempel entfernt werden. Die endgültige Verdichtung der Schichten erfolgt durch eine Temperaturbehandlung bei 250°C bis 550°C über einen Zeitraum von 10 Minuten, wobei die thermische Stabilität der dadurch erhaltenen Schichten die der Glassubstrate übersteigt.

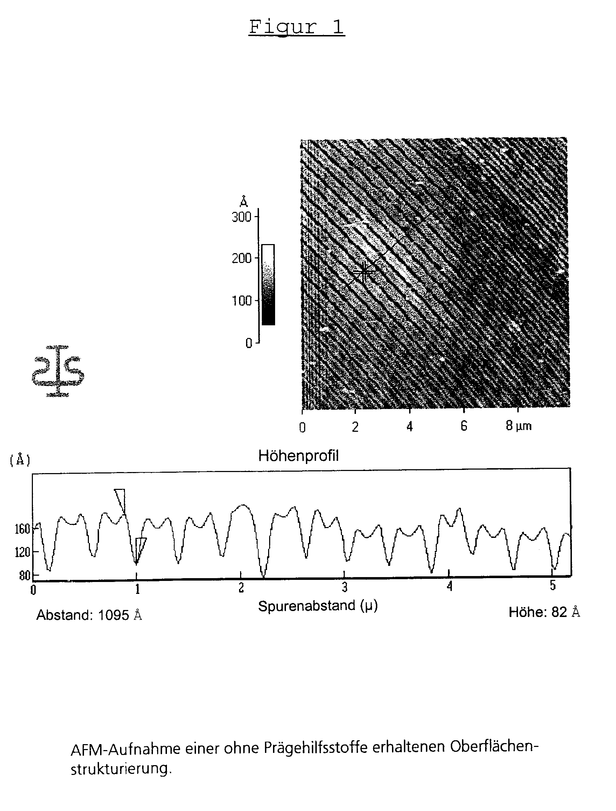

Die Figur 1 zeigt das AFM-Profil einer durch das erfindungsgemäße Verfahren erhaltenen mikrostrukturierten Schicht. Diese wurde gemäß Ausführungsbeispiel 1 aus einem Sol erhalten, das keine polymeren Prägehilfsstoffe bzw. "thickening agents" enthält.

Das Profil läßt erkennen, daß die Struktur keine vollständige Prägung des Stempels darstellt: Die Ränder der Eindrücke sind aufgeworfen, die Aufsicht zeigt Rillen in einer weiterhin planaren Oberfläche. Die Prägetiefe liegt jedoch in einem Bereich, der für sensorische Anwendungen geeignet ist, und kann sicherlich auch noch durch Variation des Prägedrucks modifiziert werden.

Unter Verwendung von Lösungsmittelgemischen lassen sich Sole herstellen, mit denen sich auch vollständige Abprägungen erreichen lassen (Ausführungsbeispiel 2). Beste Ergebnisse werden mit Lösungsmittelgemischen aus Ethanol oder Propanol oder Butanol und 1,3-Propandiol oder 1,5-Pentandiol erzielt.

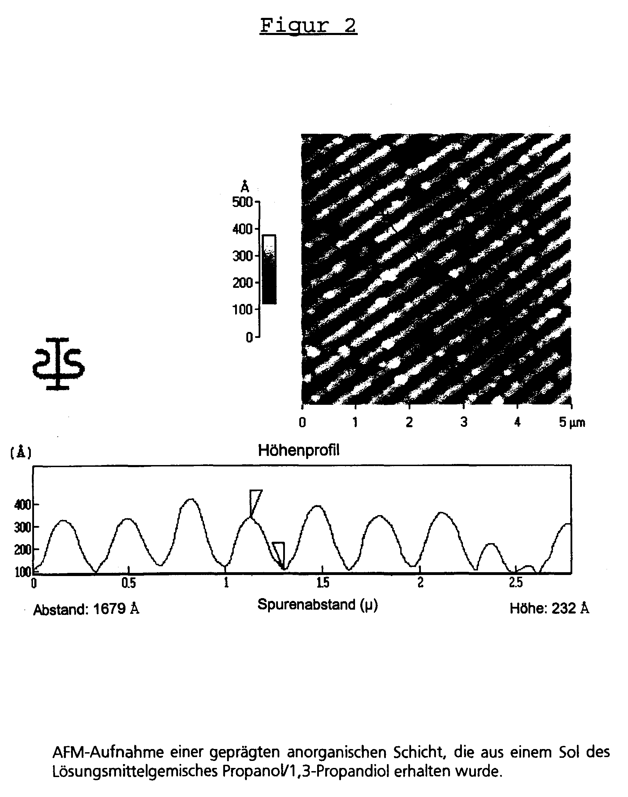

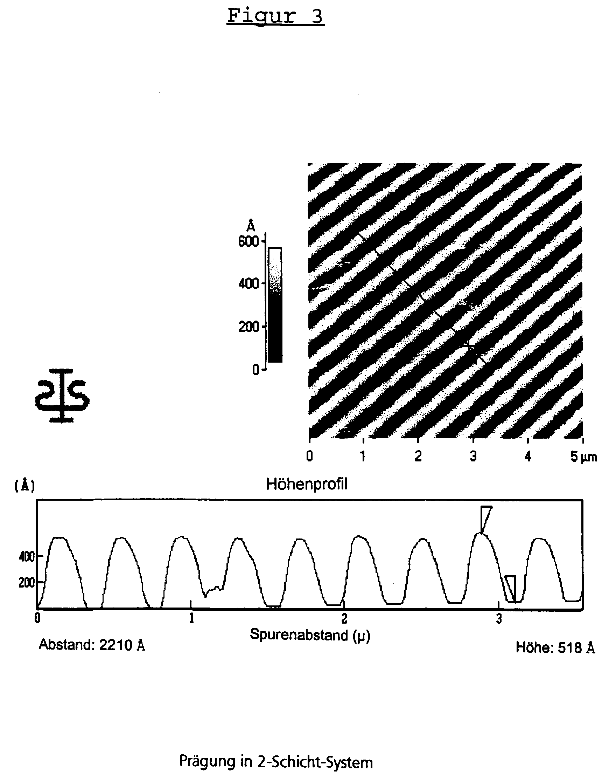

Die Figur 2 zeigt das AFM-Profil einer Schicht, die aus dem in Ausführungsbeispiel 2 beschriebenen Sol hergestellt wurde. Die Schichten zeigen im Vergleich zu Figur 1 eine höhere Prägetiefe, die Abformung findet bis in die Tiefe des Prägestempels statt. Die Porosität der so erhaltenen Schichten liegt unter der von mit polymeren Prägehilfsmitteln hergestellten Proben. Eine dichte Schichtoberfläche bei voller Prägetiefe läßt sich erreichen, wenn zuerst eine "weiche" Schicht, entweder mit Prägehilfsstoffen wie PEG oder nach Ausführungsbeispiel 2, auf das Substrat aufgebracht wird, die anschließend nach kurzer Trocknung mit einer Schicht aus einem Sol, das nur ein Lösungsmittel enthält, überzogen wird. In dieses 2-Schicht-System lassen sich mit hoher Aspekttreue Prägungen vornehmen. Erstaunlicherweise werden die Deckschichten während der thermischen Behandlung nicht durch Austreten gasförmiger Zersetzungsprodukte aus der unterliegenden Schicht zerrissen. Die Oberflächenstrukturierung ist von sehr guter Qualität (Figur 3), das Eindringen von Flüssigkeiten durch die dichte Deckschicht wird vermindert.

Die Erfindung ermöglicht die Herstellung mikrostrukturierter anorganischer Schichten mit geringer Restporosität und hoher Oberflächenqualität. Die Stöchiometrie und somit die Brechzahlen der Schichten sind über einen weiten Bereich ohne Qualitätsverlust einstellbar. Die Herstellung erfolgt aus leicht zugänglichen Vorstufen mit geringem technologischen Aufwand.

Die Erfindung wird durch die nachstehenden Ausführungsbeispiele näher erläutert.

### Ausführungsbeispiel 1

9,48 g Tetraethoxysilan (TEOS) werden mit 10,47 g Ethanol gemischt und für 5 Minuten gerührt, anschließend werden 4,83 g 0,83 M HCl unter Kühlung und heftigem Rühren zugetropft (TEOS/H₂O/HCl = 1/6,02/0,09), die klare Lösung wird weitere 30 Minuten gerührt.

1,53 g Titanbutylat werden mit 0,45 g Acetylaceton (Ti/AcAcH = 1/1) gemischt, 5 Minuten gerührt und mit 2,5 g Ethanol verdünnt.

Die Ti-haltige Lösung wird unter Rühren zu der Si-haltigen Lösung getropft und mit 73,75 g Ethanol verdünnt.

Die so erhaltene Lösung hat ein molares Verhältnis Si/Ti von 91/9, durch Variation der Einwaagen lassen sich Si/Ti-Verhältnisse bis 20/80 einstellen.

Glassubstrate werden durch Tauchziehverfahren mit dem beschriebenen Sol beschichtet, die resultierende Schichtdicke läßt sich durch die Ziehgeschwindigkeit einstellen.

Die Schichten werden 1 bis 5 Minuten an Luft bei Raumtemperatur getrocknet. Ein mikrostrukturierter Prägestempel aus Nickel oder dessen Abprägung in Polymerfolien werden mit einer Schraubzwinge auf die Schicht gepreßt, und die Probe wird 1 bis 10 Minuten bei Temperaturen zwischen 80°C und 110°C ausgelagert.

Nach Auslagerung kann der Prägestempel entfernt werden. Die endgültige Verdichtung der Schichten erfolgt durch 10-minütige Temperaturbehandlung bei 250°C bis 550°C, wobei die thermische Stabilität der Schichten die der Glassubstrate ubersteigt.

Bei einer Profiltiefe des Prägestempels von 94 nm lassen sich Eindrucktiefen von 8 nm bis 20 nm realisieren.

### Ausführungsbeispiel 2

Herstellung der Sole wie in Ausführungsbeispiel 1, das Verdünnen der Si/Ti-Lösung erfolgt aber mit einem Lösungsmittelgemisch aus Ethanol oder Propanol oder Butanol und 1,3-Propandiol oder 1,5-Pentandiol. Die Massenverhältnisse von z.B. Ethanol/1,3-Propandiol liegen hierbei typischerweise bei 24/1.

Prägen und thermische Auslagerung wie in Ausführungsbeispiel 1.

Bei einer Profiltiefe des Prägestempels von 94 nm lassen sich Eindrucktiefen von 25 nm bis 30 nm realisieren.

### Ausführungsbeispiel 3

Glassubstrate werden zunächst mit einer Einfachbeschichtung gemäß Ausführungsbeispiel 2 oder literaturbekannter prägbarer Sol-Gel-Schichten (PEG als Prägehilfsmittel) [3,4] überzogen, bei 80°C bis 110°C ausgelagert, jedoch nicht geprägt.

Diese Schicht wird mit einer Deckschicht gemäß Ausführungsbeispiel 1 überzogen und an Luft getrocknet.

Das Prägen der Doppelschicht und die endgültige thermische Auslagerung erfolgen wie in Anwendungsbeispiel 1.

Bei einer Profiltiefe des Prägestempels von 94 nm lassen sich Eindrucktiefen von 40 nm bis 60 nm realisieren. Die geprägten Schichten weisen eine hohe Aspekttreue und eine verminderte Oberflächenporosität auf.

## Patentansprüche

1. Verfahren zur Herstellung eines mikrostrukturierten Schichtsystems, umfassend ein Substrat und eine oder mehrere Schichten aus TiO₂/SiO₂, **gekennzeichnet** durch
(i) Herstellung eines SiO₂/TiO₂-Sols durch
(a) Auflösen einer Siliciumverbindung der allgemeinen Formel
Si(OR)₄,
in der die Reste R gleich oder verschieden sind und geradkettige, verzweigte oder cyclische Alkyl- oder Alkenylreste mit 1 bis 10 Kohlenstoffatomen darstellen, die gegebenenfalls ein oder mehrere Carbonyl- und/oder Ester- und/oder Carboxylfunktionen aufweisen, in einem aliphatischen Alkohol mit 1 bis 5 Kohlenstoffatomen,
(b) Vorhydrolyse der Lösung durch Zugabe von Wasser oder wäßrigen sauren oder alkalischen Lösungen,
(c) Auflösen bzw. Umsetzen einer Titanverbindung der allgemeinen Formel
Ti(OR)₄,
worin R wie voranstehend definiert ist, in bzw. mit β-Ketoestern und/oder β-Diketonen und gegebenenfalls Verdünnen der so erhaltenen Lösung mit einem aliphatischen Alkohol mit 1 bis 5 Kohlenstoffatomen,
(d) Zugabe der titanhaltigen Lösung zu der siliciumhaltigen Lösung und gegebenenfalls
(e) Verdünnung der so erhaltenen Lösung mit einem aliphatischen Alkohol mit 1 bis 5 Kohlenstoffatomen oder einem Gemisch, umfassend den vorgenannten Alkohol und ein Diol mit 2 bis 8 Kohlenstoffatomen,
(ii) Beschichten eines Substrats mit dem gemäß Stufe (i) erhaltenen SiO₂/TiO₂-Sol,
(iii) Trocknen des beschichteten Substrats und gegebenenfalls Aufbringen einer weiteren Schicht aus einem gemäß Stufe (i) erhaltenen SiO₂/TiO₂-Sol oder einer an sich bekannten Sol-Gel-Schicht,
(iv) Prägung der Oberfläche des so beschichteten Substrate zur Herstellung einer Mikrostruktur unter Auslagern des beschichteten Substrats bei einer Temperatur von 80°C bis 110°C und
(v) Temperaturbehandlung des beschichteten Substrats bei 250°C bis 550°C.

2. Verfahren nach Anspruch 1, dadurch **gekennzeichnet,** daß man als Diol 1,3-Propandiol oder 1,5-Pentandiol verwendet.

3. Verfahren nach Anspruch 1 oder 2, dadurch **gekennzeichnet,** daß man als Substrat ein mit einer an sich bekannten prägbaren SiO₂/TiO₂-Sol-Gel-Schicht versehenes Substrat verwendet.

4. Verfahren nach den Ansprüchen 1 bis 3, dadurch **gekennzeichnet,** daß man als Substrat ein Substrat aus Glas, Metall oder Keramik verwendet.

5. Verfahren nach den Ansprüchen 1 bis 4, dadurch **gekennzeichnet,** daß man zur Herstellung des SiO₂/TiO₂-Sols gemäß Stufe (i) ein Lösungsmittelgemisch verwendet und die in Stufe (iii) genannte weitere Schicht nur ein Lösungsmittel umfaßt.

6. Verwendung des nach dem Verfahren nach den Ansprüchen 1 bis 5 hergestellten mikrostrukturierten Schichtsystems als Antireflexschicht, als Teil eines diffraktiven Gittersystems oder als Teil eines Biosensors.
